(19) Europäisches Patentamt
European Patent Office
Office européen des brevets

(11) **EP 2 199 615 B1**

(12) **EUROPEAN PATENT SPECIFICATION**

(45) Date of publication and mention
of the grant of the patent:
**23.11.2016 Bulletin 2016/47**

(51) Int Cl.:
***F04D 13/06*** *(2006.01)*

(21) Application number: **09009898.9**

(22) Date of filing: **30.07.2009**

(54) **Motor for compressor, compressor, and refrigerating cycle apparatus**

Motor für einen Verdichter, Verdichter und Kühlkreisvorrichtung

Moteur pour compresseur, compresseur, et appareil de cycle de réfrigération

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.12.2008 JP 2008323309**

(43) Date of publication of application:
**23.06.2010 Bulletin 2010/25**

(73) Proprietor: **Mitsubishi Electric Corporation Chiyoda-ku Tokyo 100-8310 (JP)**

(72) Inventors:
• **Tsutsumi, Takahiro Tokyo 100-8310 (JP)**
• **Oikawa, Tomoaki Tokyo 100-8310 (JP)**
• **Kazama, Osamu Tokyo 100-8310 (JP)**
• **Tajima, Tsuneyoshi Tokyo 100-8310 (JP)**
• **Okugawa, Sadami Tokyo 100-8310 (JP)**

(74) Representative: **Pfenning, Meinig & Partner mbB Patent- und Rechtsanwälte Theresienhöhe 11a 80339 München (DE)**

(56) References cited:
WO-A2-02/06675          JP-A- H09 250 484
JP-A- 2001 349 284       US-A1- 2006 140 791

**Description**

BACKGROUND OF THE INVENTION

FIELD OF THE INVENTION

The present invention relates to a motor for compressor, the compressor, and a refrigerating cycle apparatus.

DISCUSSION OF THE BACKGROUND

Conventionally, as for a rotating shaft of a compressor, it is generally done that an outer diameter of a part to which a rotor of a motor for compressor is fixed (motor shaft) is made equal to an outer diameter of a part to be fitted to a bearing of a compressing element (patent document 1, for example).

LIST OF REFERENCES

[Patent Document 1] JP03-294671.
When an induction motor is used as the motor for compressor, in order to improve the efficiency of the induction motor while securing a flow passage of the refrigerant by providing an air hole between an end ring of a rotor and a shaft through hole, an inner diameter of the end ring needs to be decreased as much as possible to increase the volume of the end ring. However, if the outer diameter of the motor shaft is equal to the outer diameter of the part to be fitted to the bearing part of the compressing element as the conventional compressor, there is a problem that it is difficult to secure the flow passage of the refrigerant when the inner diameter of the end ring is decreased. Document JP 2001 349284 describes a motor for a compressor according to the preamble of claim 1.

SUMMARY OF THE INVENTION

A motor for compressor according to the invention is a motor for compressor used for a motor element of a compressor having the motor element including a stator and a rotor and a compressing element driven by the motor element, the motor has a rotating shaft including a main shaft part to be fitted to an upper bearing of the compressing element and a rotor fixing shaft fixing the rotor and having an outer diameter being smaller than an outer diameter of the main shaft part, and the rotor comprises: a shaft through hole formed at an approximate center part of the rotor and to be fixed to the rotor fixing shaft; and an air hole provided around a circumference of the shaft through hole and at least a part of which is located at inner side than an outer circumference of the main shaft part of the rotating shaft.

BRIEF DESCRIPTION OF THE DRAWINGS

A complete appreciation of the present invention and many of the attendant advantages thereof will be readily obtained as the same becomes better understood by reference to the following detailed description when considered in connection with the accompanying drawings, wherein:

Fig. 1 shows the first embodiment, and is a longitudinal cross sectional view of a rotary compressor 100;
Fig. 2 shows the first embodiment, and is a cross sectional view of neighborhood of a motor element 13 of the rotary compressor 100;
Fig. 3 shows the first embodiment, and is a perspective view of a rotor 11;
Fig. 4 shows the first embodiment, and is a cross sectional view of a rotor iron core 11a;
Fig. 5 shows the first embodiment, and is an enlarged view of "A" part of Fig. 4;
Fig. 6 shows the first embodiment, and is a front view of a rotating shaft 8;
Fig. 7 shows the first embodiment, and is a plan view of a rotor 11;
Fig. 8 shows the first embodiment, and is a plan view of the rotor 11 of a deformed example 1;
Fig. 9 shows the first embodiment, and is a plan view of the rotor 11 of a deformed example 2;
Fig. 10 shows the first embodiment, and is a plan view of the rotor 11 of a deformed example 3;
Fig. 11 shows the first embodiment, and is a plan view of the rotor 11 of a deformed example 4;
Fig. 12 shows the first embodiment, and is a structural diagram of a refrigerating cycle apparatus employing the rotary compressor 100; and
Fig. 13 is shown for comparison, and is a plan view of the rotor 11.

**EP 2 199 615 B1**

## DESCRIPTION OF THE PREFERRED EMBODIMENTS

Embodiment 1.

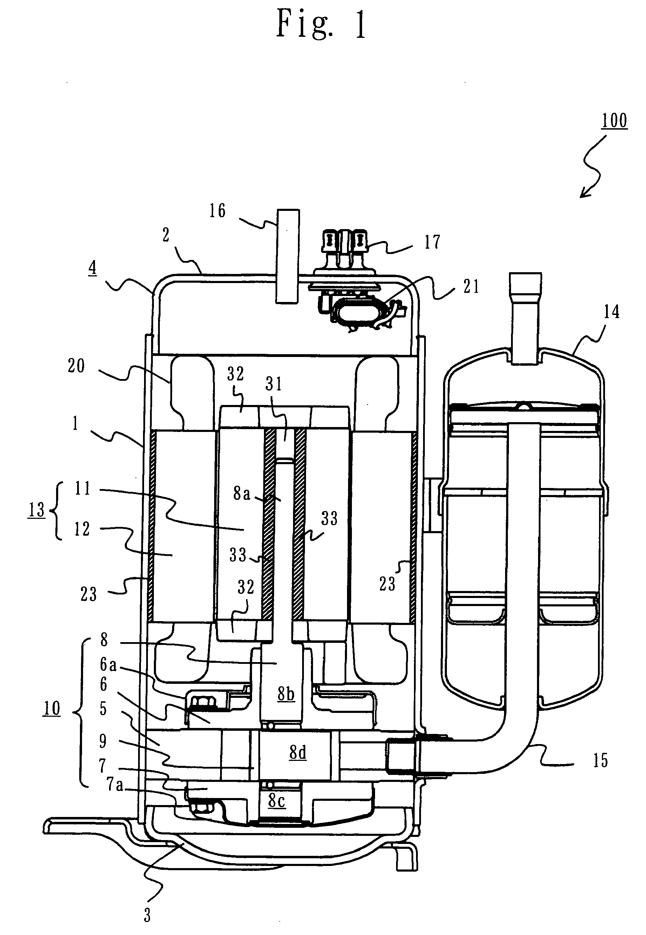

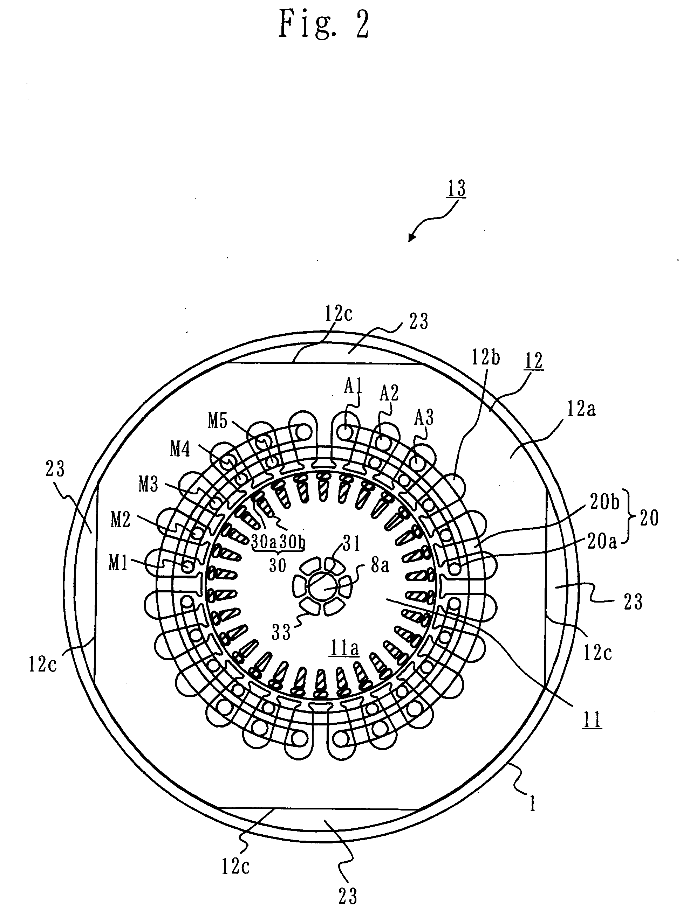

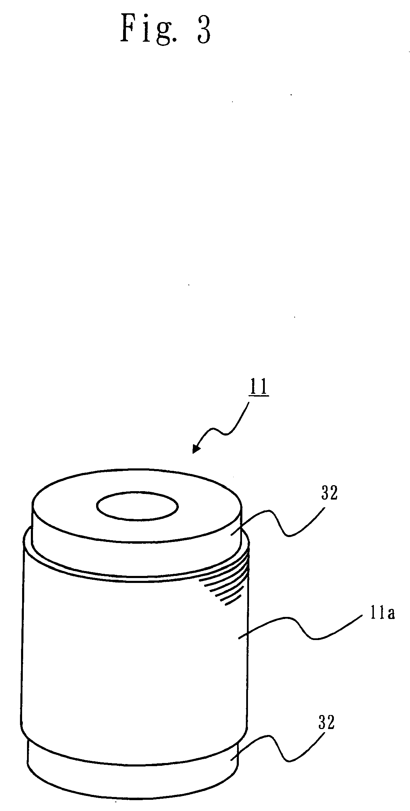

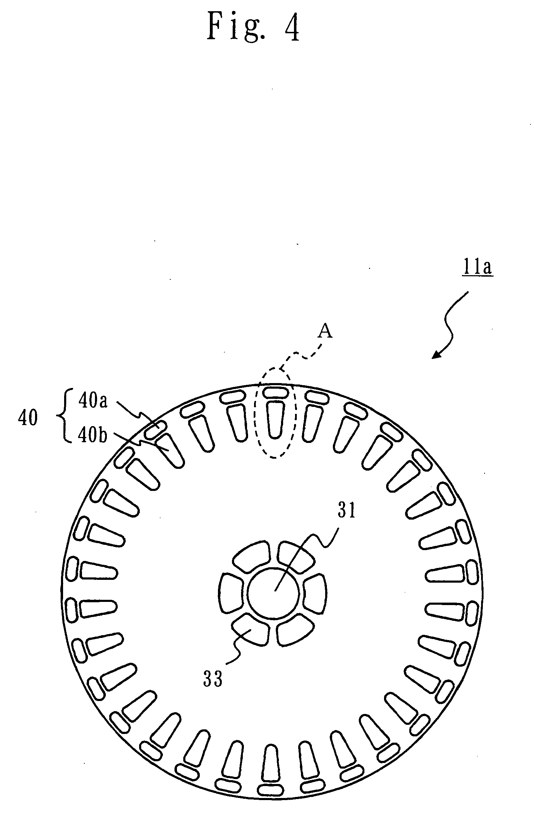

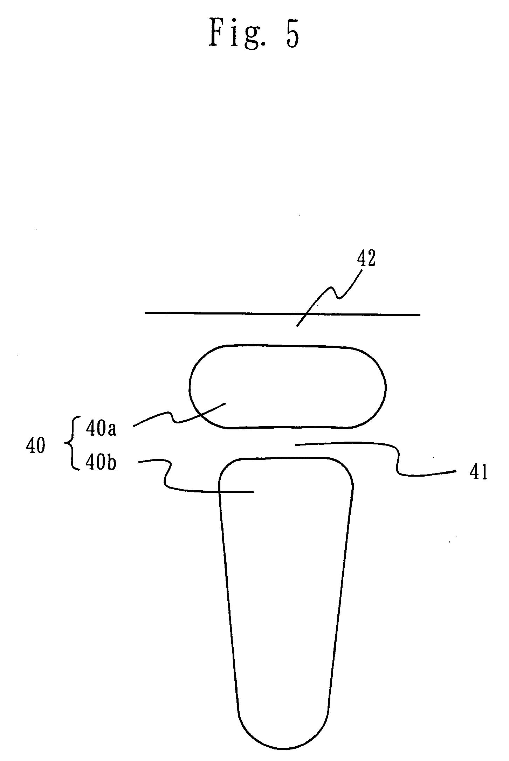

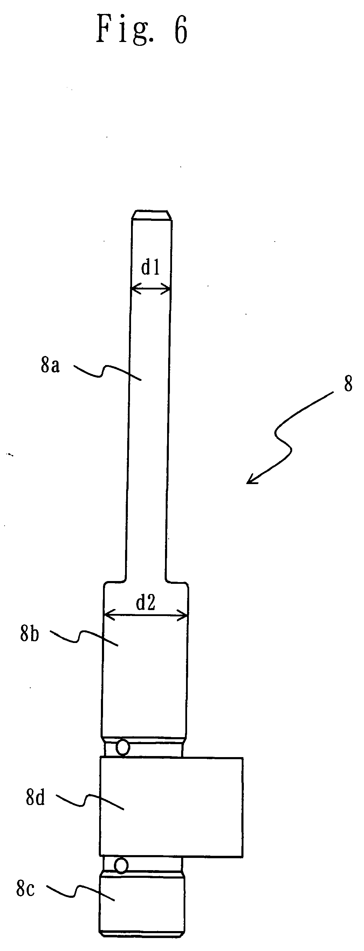

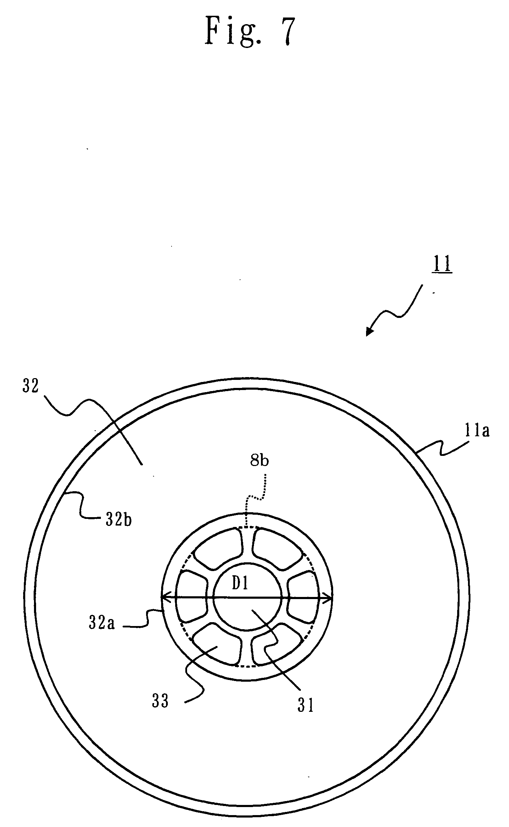

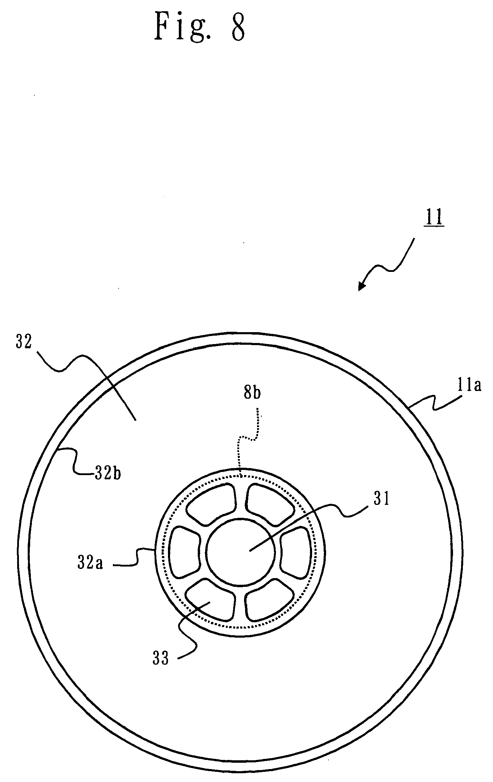

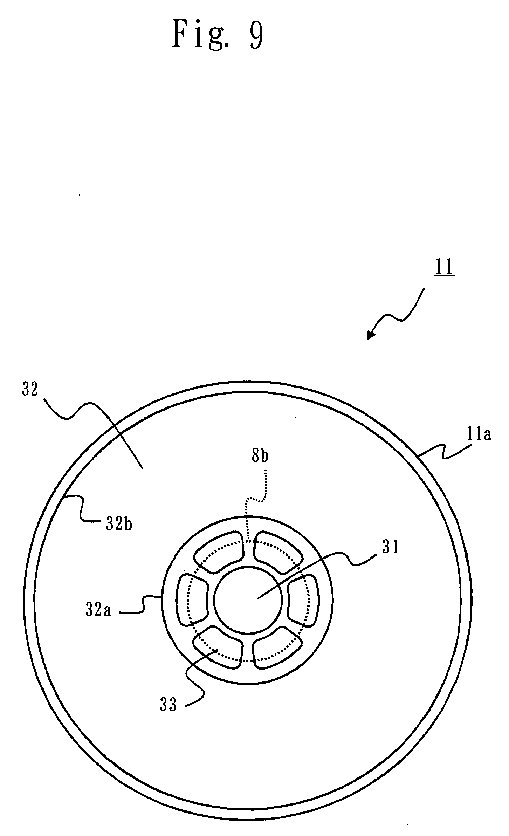

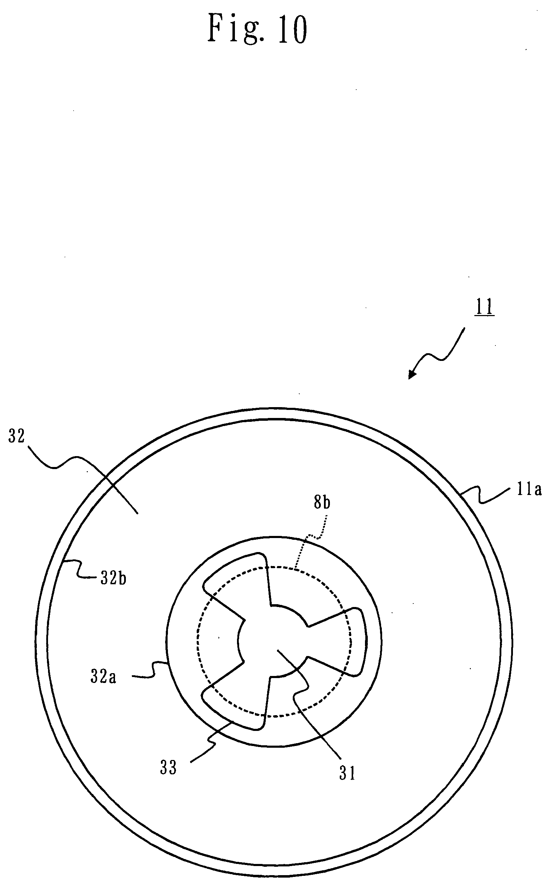

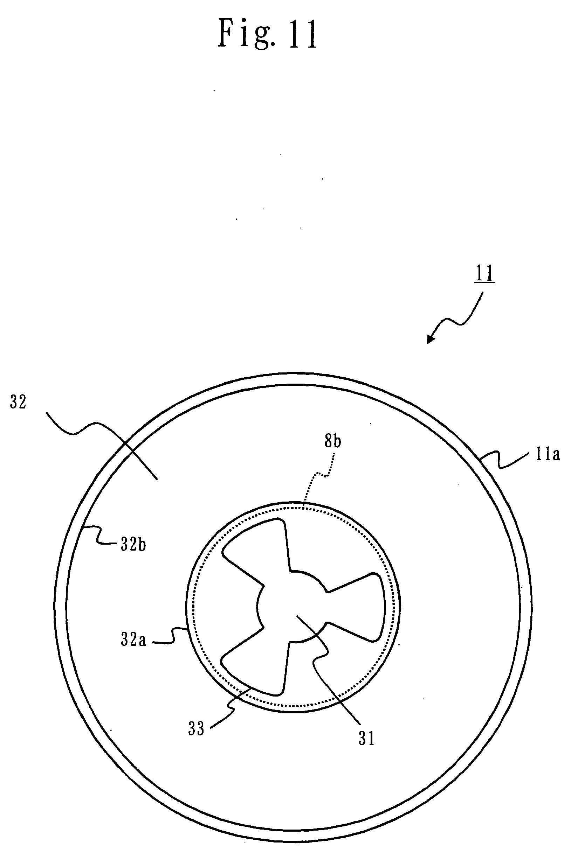

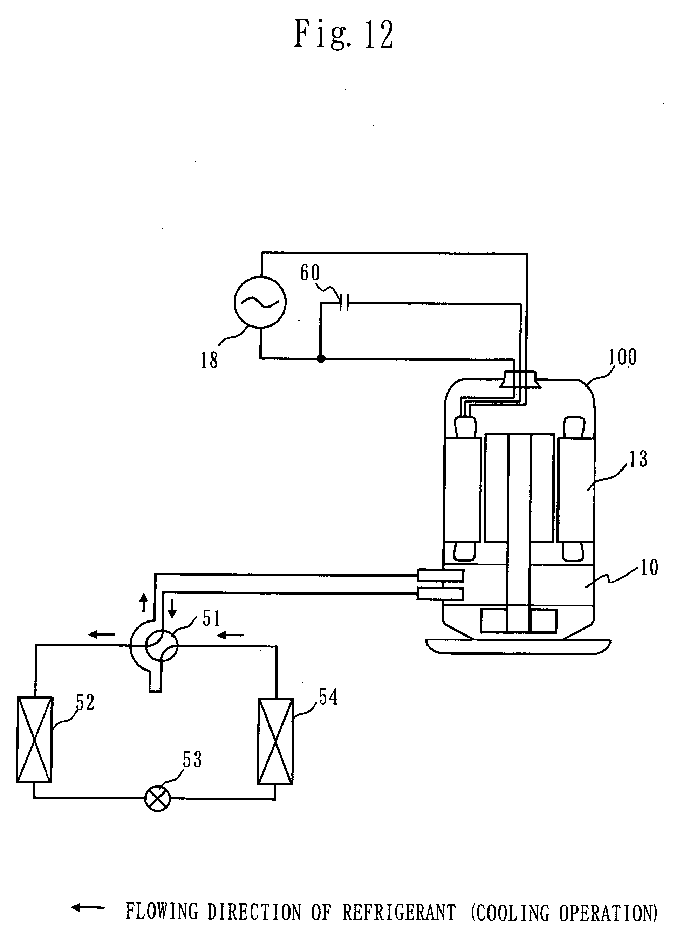

Figs. 1 through 11 show the first embodiment; Fig. 1 is a longitudinal cross sectional view of a rotary compressor 100; Fig. 2 is a cross sectional view of neighborhood of a motor element 13 of the rotary compressor 100; Fig. 3 is a perspective view of a rotor 11; Fig. 4 is a cross sectional view of a rotor iron core 11 a; Fig. 5 is an enlarged view of "A" part of Fig. 4; Fig. 6 is a front view of a rotating shaft 8; Fig. 7 is a plan view of a rotor 11; Fig. 8 is a plan view of the rotor 11 of a deformed example 1; Fig. 9 is a plan view of the rotor 11 of a deformed example 2; Fig. 10 is a plan view of the rotor 11 of a deformed example 3; Fig. 11 is a plan view of the rotor 11 of a deformed example 4; and Fig. 12 is a structural diagram of a refrigerating cycle apparatus employing the rotary compressor 100.

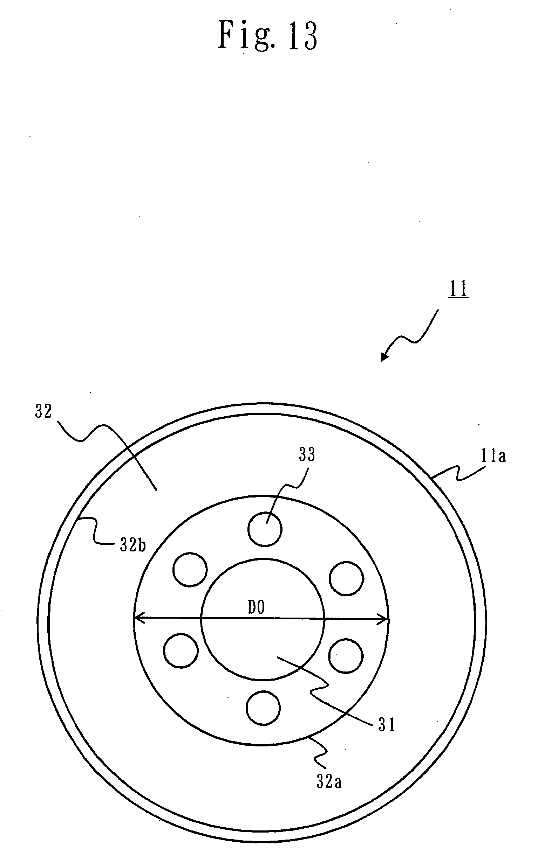

Fig. 13 is shown for comparison, and is a plan view of the rotor 11.

The present embodiment has a feature in the structure of the rotor 11 and the rotating shaft 8 of a motor for compressor used for a compressor such as the rotary compressor 100, etc.

The rotary compressor 100 has a known structure except for the rotor 11 and the rotating shaft 8 of the motor for compressor. Accordingly, with reference to Fig. 1, a general structure of 1-cylinder rotary compressor 100 (an example of the compressor) will be briefly explained.

As shown in Fig. 1, the rotary compressor 100 (an example of the compressor) contains a compressing element 10 and a motor element 13 (referred to as a motor for compressor) and refrigerating machine oil, not illustrated, in a hermetic container 4. The refrigerating machine oil is reserved in the bottom part within the hermetic container 4. The refrigerating machine oil mainly lubricates a sliding part of the compressing element 10. The hermetic container 4 includes a body part 1, an upper plate container 2, and a lower plate container 3. The compressing element 10 and the motor element 13 are fixed to the body part 1 of the hermetic container 4.

The compressing element 10 includes a cylinder 5, an upper bearing 6 (an example of a bearing), a lower bearing 7 (an example of a bearing), a rotating shaft 8, a rolling piston 9, an upper discharge muffler 6a, a lower discharge muffler 7a, a vane (not illustrated), etc.

The cylinder 5 in which a compression chamber is formed has a cylinder chamber, an outer circumference of which is an almost circular form in planar view and an inside of which is an almost circular space in planar view. The cylinder chamber has openings at both ends of the axial direction. The cylinder 105 has a predetermined height in the axial direction in side view.

A vane groove (not illustrated), which is communicated with the cylinder chamber being the almost circular space of the cylinder 105 and extends in the radial direction, is provided by penetrating in the axial direction.

Further, at the back (the outside) of the vane groove, a back pressure chamber (not illustrated), which is an almost circular space in planar view and is communicated with the vane groove, is provided.

In the cylinder 5, a suction port (not illustrated) which is flowed through by sucked gas from the refrigerating cycle is penetrated through the cylinder chamber from the outer circumference of the cylinder 5.

In the cylinder 5, a discharge port (not illustrated) which is made by cutting a part around an edge of the circle that forms the cylinder chamber being the almost circular space, is provided.

The rolling piston 9 rotates eccentrically within the cylinder chamber. The rolling piston 9 has a ring shape; an inner circumference of the rolling piston 9 is fixed to an eccentric shaft part 8d of the rotating shaft 8 slidably

The vane is contained in the vane groove of the cylinder 5, and the vane is always pushed against the rolling piston 9 with a vane spring (not illustrated) provided at the back pressure chamber. As for the rotary compressor 100, since the inside of the hermetic container 4 is high-pressure, on starting the operation, a force caused by a pressure difference between the high pressure in the hermetic container 101 and the pressure in the cylinder chamber is worked on the back face of the vane (the back pressure chamber side), and thus the vane spring is used mainly to push the vane to the rolling piston 9 at the time of starting the rotary compressor 100 (when there is no pressure difference between the inside of the hermetic container 4 and the pressure of the cylinder chamber).

A shape of the vane is a flat (the thickness in the circumferential direction is smaller than the length of the diameter direction or the axial direction) almost rectangular solid.

An upper bearing 6 is fitted slidably to a main shaft part 8b (a part at the motor element 13 side from the eccentric shaft part 8d) of the rotating shaft 8, and as well blocks one end (the motor element 13 side) of the cylinder chamber (including the vane groove) of the cylinder 5.

To the upper bearing 6, a discharge valve (not illustrated) is attached. The upper bearing 6 has an approximate inverted T shape in side view.

A lower bearing 7 is fitted to an auxiliary shaft part 8c (a part below the eccentric shaft part 8d) of the rotating shaft 8 slidably, and as well blocks the other end (refrigerating machine oil side) of the cylinder chamber (including the vane groove) of the cylinder 5.

A discharge valve (not illustrated) is attached to the lower bearing 7. The lower bearing 7 has an approximate T shape in side view.

To the outside of the upper bearing 6 (the motor element 103 side), an upper discharge muffler 6a is attached. High-temperature and high-pressure discharge gas discharged from the discharge valve of the upper bearing 6 enters to the upper discharge muffler 6a once, and then is blown out into the hermetic container 4 from a discharge hole (not illustrated) of the upper discharge muffler 6a.

To the outside of the lower bearing 7 (the opposite side to the motor element 103), a lower discharge muffler 7a is attached. High-temperature and high-pressure discharge gas discharged from the discharge valve of the lower bearing 7 enters to the lower discharge muffler 7a once, and then is blown out into the hermetic container 4 from a discharge hole (not illustrated) of the lower discharge muffler 7a.

The rotary compressor 100 is provided with a suction muffler 14 at an outside (the side part) of the hermetic container 4. The suction muffler 14 is fixed to the side surface of the hermetic container 4 by welding, etc. The suction muffler 14 is provided so as to prevent liquid refrigerant from being sucked to the rotary compressor 100. A suction pipe 15 of the suction muffler 14 is connected to the cylinder 5 of the compressing element 10. High-pressure and high-temperature gas refrigerant compressed by the compressing element 10 is discharged from the upper discharge muffler 6a and the lower discharge muffler 7a to the inside of the hermetic container 4, passes through the motor element 13, and is finally blown out to the outside refrigerant circuit (not illustrated) from the discharge pipe 16.

The motor element 13 includes a stator 12 fixed to a body part 1 of the hermetic container 4 and the rotor 11 which rotates inside of the stator 12.

The rotor 11 is, a detail will be discussed later, a double squirrel cage rotor made of aluminum die-cast. To the inner circumference of the rotor 11, the rotating shaft 8 is fixed. However, the rotor is not limited to the double squirrel cage rotor. A normal squirrel cage rotor can be used.

The rotor 11 is fixed to the rotor fixing shaft 8a of the rotating shaft 8.

High-pressure and high-temperature gas refrigerant compressed by the compressing element 10 is discharged from the upper discharge muffler 6a and the lower discharge muffler 7a to the inside of the hermetic container 4, passes through the motor element 13, and the gas refrigerant passes through an air hole 33 (discussed later) formed at the rotor 11.

A lead wire (not illustrated) is connected to a winding 20 of the stator 12. The lead wire is connected to a glass terminal 17 via a protection device 21 which protects the motor element 13. The glass terminal 17 is fixed to the hermetic container 4 by welding. Electric power is supplied to the glass terminal 17 from the outside power source.

Between the stator 12 and the body part 1 of the hermetic container 4, an oil returning passage 23 is formed for returning the refrigerating machine oil which is discharged to the above of the motor element 13 by passing through the air hole 33 formed at the rotor 11 with the gas refrigerant and separated by an oil separator, not illustrated, to the bottom part of the hermetic container 4.

With reference to Fig. 2, the structure of the motor element 13 will be further explained. The motor element 13 shown in Fig. 2 is a two-pole single-phase induction motor. The stator 12 includes a stator iron core 12a, and a main winding 20a and an auxiliary winding 20b which are inserted to a stator slot 12b. The main winding 20a and the auxiliary winding 20b form the winding 20. To the stator slot 12b, insulating member (a slot cell, wedge, etc., for example) to secure insulation between the winding 20 and the stator iron core 12a, of which explanation is omitted here. In this example, the number of the stator slots 12b is twenty four. However, this is merely an example, and the number of the stator slots 12b is not limited to twenty four.

The stator slots 12b are formed along the inner circumferential edge of the stator iron core 12a. The stator slots 12b are arranged in the circumferential direction with approximate equal intervals.

The stator slots 12b extend in the radial direction. The stator slots 12b open at the inner circumferential edge. This opening is called as a slot opening. The winding (the main winding 20a and the auxiliary winding 20b) is inserted from the slot opening.

The main winding 20a is a winding of a concentric winding system. In the example of Fig. 2, the main winding 20a is provided at the inner circumferential side (the closer side to the rotor 11). Here, the main winding 20a of concentric winding system includes five coils, each size of which is different (the length in the circumferential direction, in particular). Then, these five coils are inserted to the stator slot 12b so that the centers of the five coils are arranged at the same place. Therefore, this is called the concentric winding system. The drawing shows that the main winding 20a includes five coils; however, this is merely an example, and the number is not limited to five.

It is assumed that the five coils of the main winding 20a are M1, M2, M3, M4, and M5 in the order of size from the largest (of which the slot pitch is 11). They are selected so that the distribution becomes an approximate sine wave. This is so that the main winding magnetic flux which is generated when the electric current flows through the main winding 20a becomes a sine wave.

The main winding 20a can be provided at either of the inner circumferential side and the outer circumferential side of the stator slot 12b. If the main winding 20a is provided at the inner circumferential side of the stator slot 12b, the coil length of winding becomes shorter compared with a case in which the main winding 20a is provided at the outer circumferential side of the stator slot 12b. Further, if the main winding 20a is provided at the inner circumferential side of the stator slot 12b, the leakage flux is decreased compared with the case in which the main winding 20a is provided at the outer circumferential side of the stator slot 12b. Accordingly, when the main winding 20a is provided at the inner circumferential side of the stator slot 12b, impedance (the resistance value, the leakage reactance) of the main winding 20a is decreased compared with the case in which the main winding 20a is provided at the outer circumferential side of the stator slot 12b. Therefore, the performance of the single-phase induction motor is improved.

Electric current flows through the main winding 20a, thereby generating main winding magnetic flux. The direction of the main winding magnetic flux is a vertical direction of Fig. 2. As discussed before, the numbers of windings of the five coils (M1, M2, M3, M4, and M5) of the main winding 20a are selected so that the waveform of the main winding magnetic flux becomes a sine wave as much as possible. Since the electric current flowing through the main winding 20a is AC, the main winding magnetic flux also changes the size and the direction according to the electric current which flows through.

Further, the auxiliary winding 20b which is made by the concentric winding system as well as the main winding 20a is inserted to the stator slot 12b. In Fig. 2, the auxiliary winding 20b is provided at the outer side within the stator slot 12b. Electric current flows through the auxiliary winding 20b, thereby generating auxiliary winding magnetic flux. The direction of the auxiliary winding magnetic flux is orthogonal to the direction of the main winding magnetic flux (the horizontal direction of Fig. 2). Since the electric current flowing through the auxiliary winding 20b is AC, the auxiliary winding magnetic flux also changes the size and the direction according to the electric current which flows through.

Generally, the main winding 20a and the auxiliary winding 20b are inserted into the stator slot 12b so that an angle made by the main winding magnetic flux and the auxiliary winding magnetic flux is 90 degrees in electric angle (the mechanic angle is also 90 degrees, since the number of poles is two, here).

In the example of Fig. 2, the auxiliary winding 20b includes three coils, each size of which is different (the length in the circumferential direction, in particular). It is assumed that the three coils of the auxiliary winding 20b are A1, A2, and A3, in the order of size from the largest (of which the slot pitch is 11). They are selected so that the distribution becomes approximate sine wave. This is so that the auxiliary winding magnetic flux which is generated when the electric current flows through the auxiliary winding 20b becomes sine wave.

Then, the three coils (A1, A2, and A3) are inserted to the stator slot 12b so that the centers of the three coils are at almost the same place.

The numbers of windings of the three coils (A1, A2, and A3) of the auxiliary winding 20b are selected so that the wave form of the auxiliary winding magnetic flux becomes the sine wave as much as possible.

The main winding 20a is connected in parallel to the series connection of the auxiliary winding 20b and an operation capacitor 60 (Fig. 12). The both ends are connected to a single-phase AC power source. The operation capacitor is connected in series to the auxiliary winding 20b, thereby forwarding the phase of the electric current flowing through the auxiliary winding 20b than the phase of the electric current flowing through the main winding 20a by about 90 degree.

The location of the main winding 20a in the stator iron core 12a is dislocated with 90 degrees in electric angle from the auxiliary winding 20b, and further the phase of the electric current of the main winding 20a is made different by about 90 degrees from the phase of the auxiliary winding 20b, thereby generating a two-pole rotation magnetic field.

At the outer circumferential surface of the stator iron core 12a, four approximate straight lined notches 12c which are made by cutting the outer circumference with approximate straight lines are provided. The four notches 12c are arranged so that two notches being next to each other are orthogonal. However, this is merely one of examples, and the number, the shape, or the arrangement of the notches 12c can be arbitrary.

The stator iron core 12a is made by punching out electromagnetic steel plates having the plate thickness of 0.1-1.5mm into a predetermined shape and laminating in the axial direction, and fixing by a caulk or welding, etc.

When a single-phase induction motor employing the stator 12 is used for the rotary compressor 100, the stator 12 is fixed by shrink-fit to the body part 1 of the cylindrical hermetic container 4 of the rotary compressor 100. Between the body part 1 of the hermetic container 4 and each notch 12c, the oil returning passage 23 is formed for returning the refrigerating machine oil which is discharged to the above of the motor element 13 bypassing through the air hole 33 formed at the rotor 11 with the gas refrigerant and separated by an oil separator, not illustrated, to the bottom part of the hermetic container 4.

The rotor 11 includes the rotor iron core 11a and a double-squirrel-cage conductor. The double-squirrel-cage conductor is composed of an aluminum bar 30 and an end ring 32 (Fig. 3).

The aluminum bar 30 is composed of an outer layer aluminum bar 30a (outer layer secondary conductor) to be casted into an outer layer slot 40a (Fig. 4) and an inner layer aluminum bar 30b (inner layer secondary conductor) to be casted into an inner layer slot 40b (Fig. 4).

Aluminum of conductive material is casted both into the outer layer slot 40a and the inner layer slot 40b. Then, the outer layer aluminum bar 30a is casted into the outer layer slot 40a. Further, the inner layer aluminum bar 30b is casted into the inner layer slot 40b. The outer layer aluminum bar 30a, the inner layer aluminum bar 30b, and an end ring 32 provided to both ends of the rotor 11 in the laminating direction form a double-squirrel-cage secondary winding. Generally, the aluminum bar 30 and the end ring 32 are produced by casting aluminum with die-cast at the same time.

The end rings 32 (two) are provided to both ends of the rotor 11 in the axial direction as shown in Fig. 3. The end ring 32 is literally a ring shape (donut shape). The end rings 32 are coupled to both ends of each aluminum bar 30 (the outer layer aluminum bar 30a and the inner layer aluminum bar 30b).

The rotor iron core 11 a is made by punching out electromagnetic steel plates having the plate thickness of 0.1-1.5mm into a predetermined shape and laminating in the axial direction as well as the stator iron core 12a. The rotor iron core 11 a is, generally, made by punching out the same material with the stator iron core 12a in most cases. However, different materials can be used for the rotor iron core 11a and the stator iron core 12a.

As shown in Fig. 4, the rotor iron core 11a includes a double squirrel cage rotor slot 40. The rotor slot 40 is composed of an outer layer slot 40a and an inner layer slot 40b. The outer layer slot 40a is provided at the outer circumferential side in the radial direction. The inner layer slot 40b is provided at the inner side of the outer layer slot 40a.

The rotor iron core 11a includes a shaft through hole 31 of which a cross section is circular around the center. To the shaft through hole 31, the rotor fixing shaft 8a of the rotating shaft 8 is fixed by shrink-fit, etc. Around the circumference of the shaft through hole 31, an air hole 33 of which a cross section is an elongate hole shape is provided. In the example shown in Fig. 4, the number of the air holes 33 is six. However, the number, the shape, or the location of the air holes 33 can be arbitrary.

As shown in Fig. 5, the outer layer slot 40a and the inner layer slot 40b which form the double squirrel cage are separated by an inner circumference thin part 41 made of electromagnetic plate.

Thin iron core part between the outer circumferential surface of the rotor iron core 11 a and the outer layer slot 40a is called as an outer circumference thin part 42.

The dimension in the diameter direction of the inner circumference thin part 41 and the outer circumference thin part 42 are almost the same as the thickness of the electromagnetic plate (0.1-1.5mm) used for the rotor iron core 11a.

The number of the double-squirrel-cage rotor slots 40 of the rotor iron core 11a shown in Fig. 4 is thirty. However, this is merely one of examples, and the number of the rotor slots 40 is not limited to thirty.

Therefore, the single-phase induction motor which is the motor element 13 shown in Fig. 2 uses a combination of the number of slots of the stator iron core 12a is twenty-four, and the number of slots of the rotor iron core 11 a is thirty.

Generally, it is known that the squirrel-cage induction motor (three-phase and single-phase) has abnormal phenomena such as synchronous torque, asynchronous torque, vibration/noise, etc. It is clear that the abnormal phenomena of the squirrel-cage induction motor is caused by space harmonics in the air gap magnetic flux. The following two can be considered for the reasons of space harmonics: One is harmonics included in the magnetomotive force itself due to the arrangement of the winding; and the other is harmonics included in the air gap magnetic flux density due to irregularity of permeance of air gap (the inverse number of magnetic resistance) because of existence of a groove.

Like this, in the squirrel-cage induction motor, a combination of the number of slots of the stator and the number of slots of the rotor closely relates to the abnormal phenomena such as synchronous torque, asynchronous torque, vibration/noise, etc. Therefore, the combination of the number of slots of the stator and the number of slots of the rotor should be selected carefully.

The induction motor (single-phase and three-phase) having the double-squirrel-cage rotor 11 has the following general features: Namely, at the time of starting, the slip frequency (a difference between the frequency of rotating magnetic field and the number of rotations of the rotor 11) is increased. The leakage magnetic flux of the inner layer aluminum bar 30b is larger than the leakage magnetic flux of the outer layer aluminum bar 30a. At the time of starting when the slip frequency is high, the current distribution is decided by reactance amount, and the secondary current mainly flows through the outer layer aluminum bar 30a. Accordingly, the secondary resistance is increased, thereby increasing the starting torque and improving the starting characteristics.

Or, at the time of normal operation, since the slip frequency is low, the secondary current flows through the aluminum bar 30 as a whole, so that the aluminum cross section area is increased, and the secondary resistance is decreased. Therefore, it has a feature that the secondary copper loss can be decreased, thereby improving the efficiency.

Further, in the single-phase induction motor driven by the single-phase AC current, the starting torque tends to be smaller compared with the three-phase induction motor.

In order to decrease the secondary resistance, there is a method to increase the volume of the end ring 32. To increase the volume of the end ring 32, it is difficult to extend the outer circumference of the end ring 32 in the diameter direction. This is because it is necessary to provide the die-cast mold of the end ring 32 with an extra space for pressing around the outer circumference of the end face of the rotor iron core 11a in the axial direction. Namely, the end ring 32 cannot be extended towards the outside of the rotor 11 in the diameter direction.

Therefore, in order to extend the volume of the end ring 32, the methods should be to extend the height direction (axial direction) and extend towards the inner diameter side.

When the end ring 32 is extended in the height direction, since the length of the rotor 11 in the laminating direction (axial direction) becomes large, the whole length of the motor for compressor, which causes a problem the size of the rotary compressor 100 is increased.

In the rotary compressor 100, the end ring 32 of the compressing element 10 side cannot be extended in the axial direction, because the upper bearing 6 of the compressing element 10 exists in the neighborhood.

Further, as for the end ring 32 of the opposite side of the compressing element 10, an oil separator is sometimes provided in the neighborhood, and in such a case, the end ring 32 of the opposite side of the compressing element 10 cannot be extended in the axial direction, either.

Among the methods to extend the volume of the end ring 32, if there is a limitation in the method to extend in the height direction (axial direction), the only method is to extend towards the inner diameter side; however, if the end ring 32 is extended towards the inner diameter side, there is a problem that the rotor 11 has no room to form an air hole.

In the rotary compressor 100 of the present embodiment, the rotor fixing shaft 8a of the rotating shaft 8 is made thinner than the main shaft part 8b of the rotating shaft 8 to be fitted to the upper bearing 6, and thereby even if the end ring 32 is extended towards the inner diameter side, the air hole 33 can be formed. Here, it is sufficient only the end ring 32 of the one side is extended towards the inner diameter side.

As shown in Fig. 6, the rotating shaft 8 of the rotary compressor 100 includes the rotor fixing shaft 8a to fix the rotor 11 of the motor element 13, the main shaft part 8b to be fitted to the upper bearing 6, the eccentric shaft part 8d to be slidably fitted to the rolling piston 9, and an auxiliary shaft part 8c to be fitted to the lower bearing 7.

The end part of the rotating shaft 8 at the motor element 13 side is the rotor fixing shaft 8a, and to the rotor fixing shaft 8a, the main shaft part 8b, the eccentric shaft part 8d, and the auxiliary shaft part 8c are coupled in order.

If the diameter of the rotor fixing shaft 8a is d1, and the diameter of the main shaft part 8b is d2, the relationship of d1<d2 is satisfied.

Examples of a case, in which the rotor fixing shaft 8a of the rotating shaft 8 is made thinner than the main shaft part 8b of the rotating shaft 8 to be fitted to the upper bearing 6, and thereby the air hole 33 can be formed even if the end ring 32 is extended towards the inner diameter side, will be explained with reference to Figs. 7 through 11. Here, broken lines in Figs. 7 through 11 are hypothetical lines representing outer circumference of the main shaft part 8b of the rotating shaft 8.

In case of the rotor 11 shown in Fig. 7, the outer circumferences of the air holes 33 are almost matched to the outer circumference of the main shaft part 8b of the rotating shaft 8. The rotor fixing shaft 8a of the rotating shaft 8 is made thinner than the main shaft part 8b of the rotating shaft 8 to be fitted to the upper bearing 6, and thereby the shaft through hole 31 of the rotor 11 is also decreased compared with the case in which the rotor fixing shaft 8a is almost the same as the outer circumference of the main shaft part 8b, so that the air hole 33 can be formed between the outer circumference of the main shaft part 8b and the shaft through hole 31 of the rotor 11.

In Fig. 7, six air holes 33 are formed around the shaft through hole 31. The air holes 33 have almost elongate hole shapes. However, the number, the shape, and the location of air holes 33 can be arbitrary.

Like this, the air holes 33 can be formed between the outer circumference of the main shaft part 8b and the shaft through hole 31, and thereby the end ring 32 can be extended to the inner diameter side.

It is assumed that an edge part of the inner diameter side of the ring-shape (donut shape) end ring 32 is an inner diameter side edge part 32a, and an edge part of the outer diameter side of the end ring 32 is an outer diameter side edge part 32b.

Fig. 13 is shown for comparison, and is a plan view of the rotor 11 when the outer diameter of the rotor fixing shaft 8a of the rotating shaft 8 is almost the same as the outer diameter of the main shaft part 8b of the rotating shaft 8. In this case, the inner diameter of the shaft through hole 31 of the rotor 11 is almost the same as the outer diameter of the main shaft part 8b of the rotating shaft 8, and thus a hypothetical line of the main shaft part 8b is not shown in Fig. 13. Since the air hole 33 of the rotor 11 is located outside of the shaft through hole 31 (the main shaft part 8b), the inner diameter D0 of the end ring 32 becomes larger than the inner diameter D1 of the end ring 32 shown in Fig. 7.

In the rotor 11 in Fig. 7, the rotor fixing shaft 8a of the rotating shaft 8 is made smaller than the main shaft part 8b of the rotating shaft 8 to be fitted to the upper bearing 6, and thereby the shaft through hole 31 of the rotor 11 is also decreased compared with a case in which the outer diameter of the rotor fixing shaft 8a is almost the same as the main shaft part 8b, so that the air hole 33 can be formed between the outer circumference of the main shaft part 8b and the shaft through hole 31 of the rotor 11. Therefore, the end ring 32 can be extended towards the inner diameter side, which enables to reduce the secondary resistance (resistance of the double-squirrel-cage conductor) with the extended amount.

The secondary resistance R2 is expressed simply by the resistance Rbar of the aluminum bar 30 and the resistance Rring of the end ring 32 as the following expression:

$$R2 = k1 \times (Rbar + Rring) \qquad (1)$$

Here, k1 is a resistance coefficient.

Further, the resistance Rring of the end ring 32 is proportional to an average diameter Dr of the end ring 32, and is inversely proportional to a cross section area Ar of the end ring 32. Namely,

$$\text{Rring} = \text{k2} \ \times \ \text{Dr/Ar} \qquad\qquad (2)$$

Here, k2 is a coefficient.

Accordingly, if the end ring 32 is extended towards the inner diameter side, the average diameter Dr of the end ring 32 is decreased, and the cross section area Ar of the end ring 32 is increased, so that the resistance Rring of the end ring 32 is reduced.

If the end ring 32 is extended towards the inner diameter side, the resistance Rbar of the aluminum bar 30 is not changed, but the resistance Rring of the end ring 32 is reduced, and thus the secondary resistance R2 can be reduced.

When the rotor having a general rotor slot shape (normal squirrel-cage shape) which is not a double-squirrel-case shape is employed, if the cross section area of the end ring is increased, the efficiency of the normal operation can be improved, because the secondary resistance is decreased; however, there is a problem that the starting torque of the induction motor is decreased.

If the starting torque of the induction motor is decreased, high power source voltage is required to obtain the same starting torque. When the power source voltage is decreased for some reason, there may be a case that the induction motor cannot be started.

The present embodiment uses the rotor 11 having the double-squirrel-cage rotor slot 40. Therefore, it is possible to obtain the highly reliable induction motor while securing the starting torque, and as well the induction motor which is highly efficient at the time of normal operation. In particular, when applied to a single-phase induction motor driven by a single-phase AC power source, the present embodiment can brings larger effect. This is because the starting torque/the breakdown torque (the maximum torque) of the single-phase induction motor is small compared with the one of the three-phase induction motor.

To simply increase the starting torque, there is a method to increase a capacity of the operation capacitor connected in series to the auxiliary winding 20b of the single-phase induction motor. Further, there is another method to take measure by an external circuit of the single-phase induction motor such that the starting capacitor and the relay are provided in parallel to the operation capacitor. However, the cost is also increased by any method.

According to the present embodiment, the starting torque is increased by using the rotor 11 having the double-squirrel-cage rotor slot 40, and thus no special external circuit is required to use. Therefore, the low-cost induction motor can be obtained as the operation system including circuits such as the operation capacitor.

Fig. 8 is a plan view of the rotor 11 of a deformed example 1. The rotor 11 in Fig. 7 has the structure in which the outer circumference of the main shaft part 8b and the outer circumferences of the air holes 33 almost match; however, in the rotor 11 of the deformed example 1 in Fig. 8, the air holes 33 are formed at the inner side than the outer diameter of the main shaft part 8b.

Fig. 9 is a plan view of the rotor 11 of the deformed example 2. In the rotor 11 of the deformed example 2 in Fig. 9, parts of the air holes 33 are formed at the inner side than the outer circumference of the main shaft part 8b.

The following shows essential structural requirements of the present embodiment:

(1) The rotor fixing shaft 8a of the rotating shaft 8 is made thinner than the main shaft part 8b of the rotating shaft 8 to be fitted to the upper bearing 6. Namely, if the outer diameter of the rotor fixing shaft 8a is d1, and the outer diameter of the main shaft part 8b is d2, the relationship of d1<d2 is satisfied;
(2) The air holes 33 (the number and the shape are arbitrary) of the rotor 11 are provided around the circumference of the shaft through hole 31;
(3) At least a part of each air hole 33 of the rotor 11 is located at the inner side (the center side of the rotor 11) than the outer circumference of the main shaft part 8b of the rotating shaft 8. Each air hole 33 as a whole can be located at the inner side than the outer circumference of the main shaft part 8b of the rotating shaft 8, and also a part of each air hole 33 can be located at the inner side than the outer circumference of the main shaft part 8b of the rotating shaft 8; and
(4) The inner diameter side edge part 32a of the end ring 32 is made to approach around the outer circumferences of the air holes 33.

Fig. 10 is a plan view of the rotor 11 of a deformed example 3. As shown in Fig. 10, the air holes 33 can be communicated with the shaft through hole 31. Here, the number of the air holes 33 is three; however, the number and the shape of the air holes 33 can be arbitrary. A part of each air hole 33 is located at the inner side than the outer circumference of the main shaft part 8b of the rotating shaft 8.

Fig. 11 is a plan view of the rotor 11 of a deformed example 4. In this example, it is the same that the air holes 33 are communicated with the shaft through hole 31 as Fig. 10; however, each air hole 33 as a whole is located at the inner side than the outer circumference of the main shaft part 8b of the rotating shaft 8.

Fig. 12 is a structural drawing of a refrigerating cycle apparatus employing the rotary compressor 100. The refrigerating cycle apparatus is, for example, an air conditioner. The rotary compressor 100 is connected to a single-phase power source 18. The operation capacitor 60 is connected between the auxiliary winding 20b of the single-phase induction motor of the rotary compressor 100 and the single-phase power source 18. Electric power is supplied from the single-phase power source 18 to the rotary compressor 100 to drive the rotary compressor 100. The refrigerating cycle apparatus (air conditioner) includes the rotary compressor 100, a four-side valve 51 for switching the flowing direction of refrigerant, an outdoor-side heat exchanger 52, a decompression device 53, and an indoor-side heat exchanger 54, etc. These are connected by the refrigerant pipe.

In the refrigerating cycle apparatus (air conditioner), for example, at the time of cooling operation, the refrigerant flows as shown by the arrows in Fig. 12. The outdoor-side heat exchanger 52 becomes a condenser. Further, the indoor-side heat exchanger 54 becomes an evaporator.

Although it is not illustrated, at the time of heating operation of the refrigerating cycle apparatus (air conditioner), the refrigerant flows inversely to the direction shown by arrows in Fig. 12. By the four-side valve 51, the flowing direction of refrigerant is switched. At this time, the outdoor-side heat exchanger 52 becomes the evaporator. Further, the indoor-side heat exchanger 54 becomes the condenser.

Further, as the refrigerant, HFC series refrigerant represented by R134a, R410a, R407c, etc. and natural refrigerant represented by R744 ($CO_2$) R717 (ammonia), R600a (isobutane), R290 (propane), etc. are used. As the refrigerating machine oil, low compatible oil represented by alkylbenzene system oil or compatible oil represented by ester oil is used. As a compressor, other than the rotary (rotary system) compressor, a reciprocating compressor, a scrolling compressor, etc. can be used.

The rotary compressor 100 which mounts the double-squirrel-cage rotor is used for the refrigerating cycle, and thereby it is possible to improve the performance, reduce the size, and lower the price of the refrigerating cycle apparatus.

In the motor for compressor according to the present invention, the outer diameter of the rotor fixing shaft fixing the rotor is made smaller than the outer diameter of the main shaft part of the rotating shaft to be fitted to the upper bearing of the compressing element, and thereby at least parts of the air holes provided around the circumference of the shaft through hole are located at the inner side than the outer diameter of the main shaft part of the rotating shaft, which enables to increase the volume of the end ring while securing the area of the air holes. Therefore, the secondary resistance is decreased, and the high performance motor for compressor can be obtained, while securing the flow passage of the refrigerant.

Having thus described several particular embodiments of the present invention, various alterations, modifications, and improvements will readily occur to those skilled in the art. Such alterations, modifications, and improvements are intended to be part of this disclosure, and are intended to be within and scope of the present invention. Accordingly, the foregoing description is by way of example only, and is not intended to be limiting. The present invention is limited only as defined in the following claims and the equivalents thereto.

**Claims**

1. A motor for compressor used for a motor element (13) of a compressor (100) having the motor element including a stator (12) and a rotor (11) and a compressing element (10) driven by the motor element in a hermetic container (4), the motor having a rotating shaft (8) including a main shaft part (8b) to be fitted to an upper bearing (6) of the compressing element and a rotor fixing shaft (8a) fixing the rotor and having an outer diameter being smaller than an outer diameter of the main shaft part,
   wherein the rotor comprises
   a shaft through hole (31) formed at a center part of the rotor and to which the rotor fixing shaft (8a) is fixed; **characterised in that** the rotor further comprises
   an air hole (33) provided around a circumference of the shaft through hole (31) and at least a part of which is located at an inner side of an outer circumference of the main shaft part of the rotating shaft in planar view.

2. The motor for compressor of claim 1, further comprising end rings (32) provided at both ends of the rotor in an axial direction and formed so that inner diameter side edge parts are made to approach around an outer circumference of the air hole.

3. The motor for compressor of one of claims 1 and 2, wherein the rotor is a double-squirrel-cage rotor.

4. The motor for compressor of one of claims 1 through 3, wherein the motor for compressor is a single-phase induction motor.

5. The motor for compressor of claim 4, wherein a winding (20) of the stator includes a main winding (20a) and an auxiliary winding (20b), and an operation capacitor (60) is connected in series to the auxiliary winding.

6. The compressor containing the motor element including the stator and the rotor and the compression element driven by the motor element in the hermetic container , wherein the motor for compressor of one of claims 1 through 5 is used for the motor element.

7. A refrigerating cycle apparatus structured to include at least the compressor of claim 6, a condenser, a decompression device (53), and an evaporator by connecting with a refrigerant pipe.

**Patentansprüche**

1. Motor für einen Verdichter, der für ein Motorelement (13) eines Verdichters (100) verwendet wird, der das Motorelement, das einen Stator (12) und einen Rotor (11) umfasst, und ein Verdichtungselement (10), das von dem Motorelement in einem hermetischen Behälter (4) angetrieben wird, aufweist,

wobei der Motor eine Drehwelle (8) aufweist, die einen Hauptwellenteil (8b), der an einem oberen Lager (6) des Verdichtungselements fixiert werden soll, und eine Rotorfixierwelle (8a), die den Rotor fixiert und einen Außendurchmesser aufweist, der kleiner als ein Außendurchmesser des Hauptwellenteils ist, umfasst,

wobei der Rotor Folgendes umfasst:

eine Wellendurchgangsbohrung (31), die in einem mittleren Teil des Rotors ausgebildet ist und an der die Rotorfixierwelle (8a) fixiert ist;

**dadurch gekennzeichnet, dass** der Rotor ferner Folgendes umfasst:

eine Luftbohrung (33), die um einen Umfang der Wellendurchgangsbohrung (31) herum vorgesehen ist und von der zumindest ein Teil auf einer Innenseite eines Außenumfangs des Hauptwellenteils der Drehwelle in Draufsicht positioniert ist.

2. Motor für einen Verdichter nach Anspruch 1, der ferner Endringe (32) umfasst, die an beiden Enden des Rotors in einer axialen Richtung vorgesehen sind und so ausgebildet sind, dass sich Innendurchmesserseitenrandteile um einen Außenumfang der Luftbohrung herum annähern.

3. Motor für einen Verdichter nach einem der Ansprüche 1 und 2, wobei es sich bei dem Rotor um einen Doppelkäfigläufer handelt.

4. Motor für einen Verdichter nach einem der Ansprüche 1-3, wobei es sich bei dem Motor für einen Verdichter um einen Einphasen-Induktionsmotor handelt.

5. Motor für einen Verdichter nach Anspruch 4, wobei eine Wicklung (20) des Stators eine Hauptwicklung (20a) und eine Hilfswicklung (20b) umfasst und ein Betriebskondensator (60) mit der Hilfswicklung in Reihe geschaltet ist.

6. Verdichter, der das Motorelement, das den Stator und den Rotor umfasst, und das Verdichtungselement, das von dem Motorelement in dem hermetischen Behälter angetrieben wird, enthält, wobei der Motor für einen Verdichter nach einem der Ansprüche 1-5 für das Motorelement verwendet wird.

7. Kühlkreisvorrichtung, die dahingehend strukturiert ist, mindestens den Verdichter nach Anspruch 6, einen Kondensator, eine Dekompressionsvorrichtung (53) und einen Verdampfer durch Verbindung mit einem Kühlrohr zu umfassen.

**Revendications**

1. Moteur de compresseur utilisé en tant qu'élément moteur (13) d'un compresseur (100), l'élément moteur comprenant un stator (12) et un rotor (11), et un élément de compression (10) entraîné par l'élément moteur dans un contenant hermétique (4) ;

le moteur présentant un arbre de rotation (8) qui comprend une partie arbre principal (8b) à ajuster à un roulement supérieur (6) de l'élément de compression, et un arbre de fixation de rotor (8a) qui fixe le rotor et qui présente un diamètre extérieur plus petit que le diamètre extérieur de la partie arbre principal ;

dans lequel le rotor comprend :

un trou traversant d'arbre (31) formé au niveau d'une partie centrale du rotor et sur lequel est fixé l'arbre de fixation de rotor (8a) ;

**caractérisé en ce que** le rotor comprend en outre :

un trou d'air (33) disposé autour d'une circonférence du trou traversant d'arbre (31), dont une partie au moins se situe au niveau d'un côté intérieur d'une circonférence extérieure de la partie arbre principal de l'arbre de rotation dans une vue en plan.

2. Moteur de compresseur selon la revendication 1, comprenant en outre des bagues d'extrémité (32) disposées au niveau des deux extrémités du rotor dans une direction axiale, et formées de telle sorte que les parties de bord latéral intérieur du diamètre intérieur, soient réalisées de façon à s'approcher autour d'une circonférence extérieure du trou d'air.

3. Moteur de compresseur la revendication 1 ou la revendication 2, dans lequel le rotor est un rotor à double cage d'écureuil.

4. Moteur de compresseur selon l'une quelconque des revendications 1 à 3, dans lequel le moteur de compresseur est un moteur à induction monophasé.

5. Moteur de compresseur selon la revendication 4, dans lequel un enroulement (20) du stator comprend un enroulement principal (20a) et un enroulement auxiliaire (20b), et un condensateur de démarrage (60) est connecté en série avec l'enroulement auxiliaire.

6. Compresseur contenant l'élément moteur qui comprend le stator et le rotor et l'élément de compression entraîné par l'élément moteur dans le contenant hermétique, dans lequel le moteur de compresseur selon l'une quelconque des revendications 1 à 5, est utilisé en tant qu'élément moteur.

7. Appareil de cycle de réfrigération structuré de façon à inclure au moins le compresseur selon la revendication 6, un condenseur, un dispositif de décompression (53), et un évaporateur, grâce à une connexion par une canalisation de fluide frigorigène.

# Fig. 1

# Fig. 2

# Fig. 3

# Fig. 4

# Fig. 5

# Fig. 6

# Fig. 7

# Fig. 8

# Fig. 9

# Fig. 10

11

11a

32

8b

32b

32a

33

31

# Fig. 11

# Fig. 12

← FLOWING DIRECTION OF REFRIGERANT (COOLING OPERATION)

# Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3294671 A

- JP 2001349284 A